(19) **Europäisches Patentamt / European Patent Office / Office européen des brevets**

(11) **EP 2 217 086 B1**

(12) **EUROPEAN PATENT SPECIFICATION**

(45) Date of publication and mention of the grant of the patent:
**07.08.2013 Bulletin 2013/32**

(21) Application number: **08846680.0**

(22) Date of filing: **31.10.2008**

(51) Int Cl.:
***A23F 5/38*** (2006.01)

(86) International application number:
**PCT/EP2008/064834**

(87) International publication number:
**WO 2009/059938 (14.05.2009 Gazette 2009/20)**

(54) **INSTANT BEVERAGE PRODUCT**

INSTANTGETRÄNKPRODUKT

PRODUIT DE BOISSON INSTANTANÉE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **08.11.2007 US 986503 P**

(43) Date of publication of application:
**18.08.2010 Bulletin 2010/33**

(73) Proprietor: **Nestec S.A.**
**1800 Vevey (CH)**

(72) Inventors:
• **BOEHM, Robert Thomas**
 **Marysville**
 **Ohio 43040 (US)**
• **DONHOWE, Daniel Paul**
 **Dublin**
 **Ohio 43016 (US)**
• **MATHIAS, Patricia Ann**
 **Dublin**
 **OH 43017 (US)**

• **FU, Xiaoping**
 **Dublin**
 **Ohio 43016 (US)**
• **RECHTIENE, Joseph Bernard**
 **Howell, New Jersey 07731 (US)**
• **KESSLER, Ulrich**
 **CH-1073 Savigny (CH)**
• **SUDHARSAN, Mathalai Balan**
 **CH-1004 Lausanne (CH)**
• **CHANVRIER, Hélène Michèle Jeanne**
 **F-88000 Epinal (FR)**
• **BRIEND, Anne Françoise Violette**
 **CH-1350 Orbe (CH)**
• **SCHENKER, Stefan**
 **CH-9230 Flawil (CH)**

(74) Representative: **Lomholt, Stig Bredsted**
 **Nestec S.A.**
 **Avenue Nestlé 55**
 **1800 Vevey (CH)**

(56) References cited:
 **EP-A- 0 839 457   WO-A-02/062152**
 **DE-A1- 2 402 446   US-A- 5 089 279**
 **US-B1- 6 497 911**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention relates to an instant beverage powder and, more particularly, to an instant soluble beverage powder which forms foam on its upper surface when reconstituted with water, and a method for its manufactured

### Background and Prior Art

In general, instant beverages are used to describe products such as tea, coffee or the like which are sold in a form that is easily reconstitutable with water to form a drink. Such beverages are typically in solid form and are readily soluble in hot water.

Instant soluble coffee is a phrase used to describe coffee which has been prepared by extraction of roast and ground coffee followed typically by reconstitution of the extract into a powdered product by conventional means such as freeze-drying, spray-drying or the like.

In order to prepare a beverage, hot water is then simply added to the powder thus avoiding the complicated and time-consuming process which is involved when preparing a beverage from traditional roast and ground coffee.

However, unlike coffee beverages prepared from roast and ground coffee, those prepared from instant soluble coffee do not usually exhibit a fine foam on their upper surface when reconstituted with hot water.

The foamed upper surface in beverages prepared from roast and ground coffee are typically associated with and caused, at least in part, by the machines which brew with pressurised water and/or steam.

This foam is known to positively affect the mouthfeel of the product when consumed and so is highly desired by many consumers. Furthermore, the foam acts to keep more of the volatile aromas within the beverage so that they can be appreciated by the consumer rather than lost to the surrounding environment.

Nevertheless, instant beverages such as instant soluble coffee are not suited for use with roast and ground coffee brewing apparatus and so the solution for foaming the beverage derived from roast and ground coffee is not readily applicable to instant beverages.

Instead, the foam must be generated by simple admixing of the instant beverage product and a liquid.

US-A-6,713,113 discloses a powdered soluble foaming ingredient which has a matrix containing a carbohydrate, a protein and entrapped pressurized gas. The gas is released upon addition of the dry powder to liquid.

US-A-4,830,869 and US-A-4,903,585, both to Wimmers, et al. disclose a method for making a coffee beverage having a thick layer of foamed coffee on its surface, similar in appearance to cappuccino coffee. A measured amount of spray-dried instant coffee and a small amount of cold water are combined with vigorous agitation to form a foamed coffee concentrate. Then, hot water is added to make a coffee beverage.

US-A-4,618,500 to Forquer discloses a method for preparing a brewed espresso-type coffee beverage which has froth on the surface of the beverage. Steam is injected into the brewed coffee beverage to produce the froth.

US-A-3,749,378 to Rhodes discloses an apparatus for foaming a coffee extract. Gas is introduced into the coffee extract and the foamed coffee is then spray-dried to make a soluble coffee product having a low bulk density.

A similar process is described in EP 0 839 457 B1 to Kraft Foods, whereby the soluble coffee powder is foamed by gas injection. The gas bubbles size is then reduced such that the final product will have gas bubbles of less than 10 micrometres.

Many instant foamed beverages are still lacking insofar as the foam initially produced is not conserved during consumption or the structure resembles a coarse foam rather than a fine and smooth (velvety) foam, ultimately desired by consumers. Alternatively or additionally, there may simply be insufficient foam produced.

It has now been found that powders, in particular granulated products, which resemble agglomerated, freeze-dried textures with a certain microstructure enable the production of an instant beverage product which provides excellent foam and dissolution upon reconstitution in a liquid.

It has also now been found that agglomeration of the precursor to form the powder of the invention under certain conditions enables the production of an instant beverage product which provides excellent foam upon reconstitution with water.

Agglomeration of food products by sintering is known. For instance, US-A-6,497,911 to Niro, refers to a process of preparing a water soluble coffee or tea product using a non-rewetted particulate material obtained from an extract by drying. During the process, external compaction of the product is required resulting in a product which suffers from structural collapse of the internal pores.

US-A-5,089,279 to Conopco relates to a sintering process which is performed in a closed container so as not to lose humidity during sintering. This is suitable for confectionary, for instance, as it results in a sintered mass.

US-A-4,394,395 to Nestlé describes a process for manufacturing a food product where a powder is filled into moulds, lightly compressed and then heated to sinter the powder. This results in a moulded food product.

However, this does not give a product having the desired porosity characteristics required for foaming upon reconstitution with water.

DE-A-2402446 describes a process in which a moistered layer of instant coffee powder is sintered and then comminuted an screened.

Thus, agglomeration using a sintering process is known to cause the partial or complete collapse of the microstructure (pores) in the product within which gas would be held. This problem needs to be addressed in order to provide a beverage having a desirable foamed upper surface.

Therefore, the present invention thus seeks to provide a beverage powder, which upon reconstitution yields a beverage with a desirable foamed upper surface.

## Summary of the Invention

The object of the invention is solved by the independent claims. The dependent claims further develop the central idea of the invention.

The present invention relates to a method for the manufacture of an instant beverage powder comprising the steps of:

> a. Providing a porous particulate base powder
> b. Sintering said powder to form an agglomerated cake and
> c. texturising the agglomerated cake to obtain an instant beverage powder,

wherein the porous base powder is characterised in that it has a particle porosity of at least 45%, wherein the pores have a $D_{50}$ diameter of less than 80 micrometres and has a pore diameter distribution span of less than 4.

A product obtainable by the present method also falls under an aspect of the invention.

## Brief description of the drawings

The present invention is further described hereinafter with reference to some of its embodiments shown in the accompanying drawings in which:

> Figure 1 is a schematic representation of the powder of the present invention, which shows the granulate (1) comprising closed pores (2), open pores with an opening diameter greater than 2 micrometres (3) and open pores with an opening diameter less than 2 micrometres (4).

> Figure 2 is a schematic diagram of the process of the present invention.

> Figure 3 shows SEM images comparing the microstructure of final product granules with different sintering residence time and the impact of the microstructure on the foam quality.

> Figures 4A and 4B represent X-ray tomography pictures of instant granulates of the invention sintered with two different types of instant precursor powders respectively.

Figure 5 compares different instant products by SEM images and in terms of the amount of crema obtained. The products shown are obtained using different technologies, i.e., from left to right, granulates produced by typical steam agglomeration, typical freeze-drying and methods of the present invention.

Figure 6 is a description of the equipment used to measure the crema volume of the samples, wherein (6.1) is a plastic scale for reading the foam volume, (6.2) is a water reservoir, (6.3) is the lid of the reconstitution vessel, (6.4) is a connection valve, (6.5) is the reconstitution vessel and (6.6) is the release valve.

## Detailed Description of the Invention

The present invention relates to instant beverage powders which deliver an excellent foamed upper surface (also called "crema") upon reconstitution with a liquid.

In one embodiment of the invention, the instant beverage powder is a granulate. In the following the term "granulate" is used to describe a powder product which may be obtainable by agglomeration of smaller powder particles. The granulate particles thus comprise smaller constitutive powder particles. These smaller constitutive powder particles may be partially fused to form the bigger granulate particles.

In the following, the term "powder" is used interchangeably to define the powders of the present invention and the finer powders which are used in the production of the beverage powders of the invention. Which definition is to be understood is clear from the context.

In the following, the term "open pores" is used to define channels present in the powders of the present invention. The term "closed pores" is used to define completely closed voids. Thus liquids such as water may not penetrate in the closed pores.

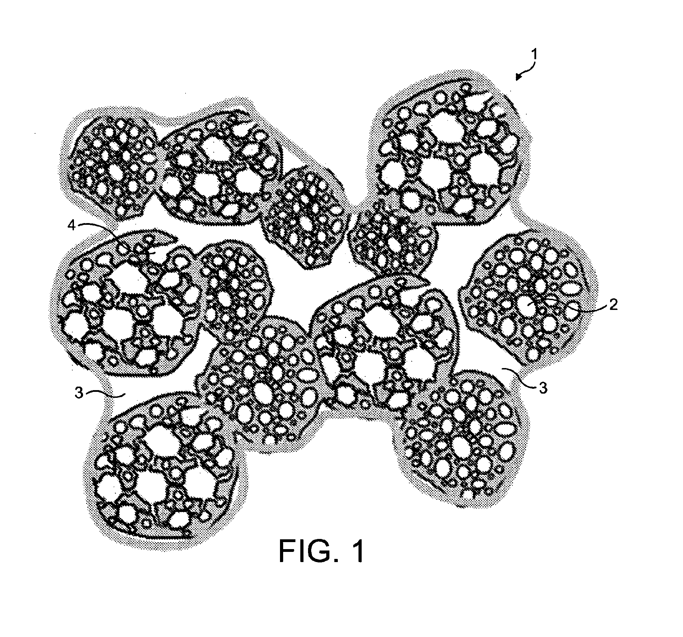

Referring to figure 1, it can be seen that the powders of the present invention (1) comprise closed pores (2), open pores with an opening diameter of less than 2 micrometres (4) and open pores with an opening greater than 2 micrometres (3).

Upon reconstitution in a liquid, the powders of the invention produce foam. The powders of the invention may thus be further defined by their foaming porosity.

Foaming porosity is a measure of the porosity which contributes to foaming and characterises the potential foaming ability of the powder of the invention. Indeed, open pores (3) will not contribute to the foaming as much, or even in some cases not at all compared to closed pores (2). Pores with opening diameter of less than 2 micrometres (4) may also contribute to foam since the capillary pressure in these pores is greater than the ambient pressure and this may enable foam formation. In the present invention, the foaming porosity is obtained by including closed pores (2) and open pores having an opening diameter of less than 2 micrometres (4).

Thus, for the purpose of measuring the foaming porosity, only closed pores (2) as well as open pores (4) having an opening diameter of less than 2 micrometres are taken into account as these are considered to contribute to foaming. The foaming porosity is obtained by the ratio of the volume of pores contributing to foaming over the volume of the aggregate excluding the volume of open pores having an opening diameter above 2 micrometres. This can be measured by mercury porosimetry or X-ray tomography.

The foaming porosity of the present powder is preferably at least 35%, such as at least 40% or at least 50%. Preferably, the foaming porosity is between 35 and 85%, more preferably between 40 and 80%, even more preferably between 40 and 75%, even more preferably between 45 and 70%, most preferably between 45 and 65%.

Another characteristic of the powders of the invention is their open pores (3). These open pores form the channels for liquid penetration into the powders of the invention. The larger the volume and size of the open pores, the higher the liquid penetration and the better the dissolution. Thus, the powders of the invention may be characterised by their "open pore volume" which provides an estimation of the ability to dissolve the powder of the invention. In order to measure the open pore volume per gram of powder, the volume of the interstices having an opening diameter between 1 and 500 micrometres is taken into account. This can be measured by mercury porosimetry.

The present powders are preferably characterised by an open pore volume of less than 3mL/g. Preferably, the open pore volume is between 0.4 and 3mL/g, more preferably between 0.6 and 2.5mL/g, even more preferably between 0.8 and 2.5mL/g, most preferably between 0.8 and 2.0mL/g.

It has also been found by the present invention that another factor influencing the dissolution and the foam volumes obtained upon reconstitution is the size distribution of the closed pores, i.e. of the internal voids (2) and the open pores having an opening of less than 2 micrometres (4). According to the invention, the powders have an average closed pore diameter $D_{50}$ of less than 80 micrometres. Preferably the pores have an average diameter $D_{50}$ of less than 60 micrometres, more preferably less than 50 micrometres, even more preferably less than 40 micrometres, most preferably less than 30 micrometres. The pore size distribution is based on the void space distribution.

The pore size distribution may be characterised by a distribution span factor of less than 4, preferably less than 3, most preferably less than 2. The distribution span factor is obtained by X-ray tomography. The span of the distribution is calculated by the following equation:

$$\text{Span} = \frac{D_{90} - D_{10}}{D_{50}}$$

wherein $D_{90}$, $D_{10}$ and $D_{50}$ represent respectively the equivalent pore size comprising 90%, 10% and 50% of the above mentioned pore size distribution. Thus, the lower the span factor, the more narrow and homogeneous the distribution of the pores.

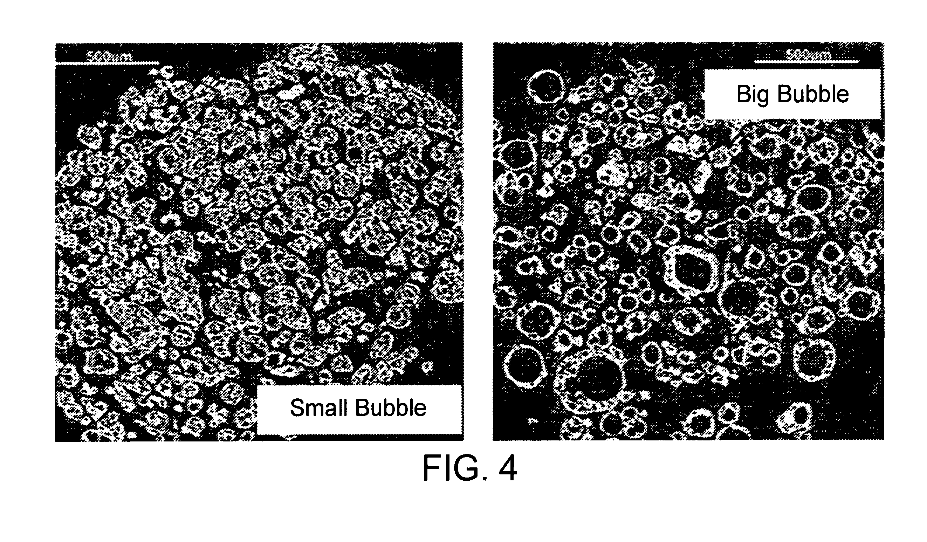

Fig. 4 shows X-ray tomography images of a powder manufactured with two different precursors (4A) and (4B). These powders have the same foaming porosity value. However, the closed pore sizes (2) and the open pores with an opening diameter of less than 2 micrometres (4) in powder (4B) are larger.

As a consequence, the quality, amount and stability of the crema of the powders of the invention (4A) are largely superior. The powders of the invention are thus characterised by a rapid disintegration and dissolution, excellent foaming ability.

Thus, the instant beverage powder of the present invention is characterised in that it preferably has a foaming porosity of at least 35%, has an open pore volume of less than 3mL/g and has a closed pore average diameter $D_{50}$ of less than 80 micrometres.

The size of the granule particles of the present invention is preferably greater than 0.5mm, preferably greater than 1mm, more preferably greater than 1.5mm.

The powder of the invention typically has a tapped density of 150-300 g/L, preferably 200-250 g/L.

Tapped density (g/mL) is determined by pouring a powder into a cylinder, tapping the cylinder in a specific manner to achieve more efficient particle packing, recording the volume, weighing the product, and dividing weight by volume. The apparatus used is a JEL jolting density metre STAV 2003.

The water content of a product of the invention is preferably between 2% and 4.5%, more preferably between 3% and 4%.

The product of the present invention dissolves in water to produce a stable froth without use of additives. This avoids the use of emulsifiers, for instance, traditionally used in the art to stabilise foams.

The powder according to the invention is preferably an instant coffee powder. Alternatively, the instant beverage may be coffee with chicory, cereal, dairy or non-dairy creamer, malted beverages. Alternatively still, the instant beverage may be made from chicory and/or cereals, cocoa, chocolate, malted beverages, dairy or non-dairy creamer.

Thus, the product of the invention can be used, for instance, as a foaming instant coffee product or can be blended with other dry food and beverage ingredients such as flavours, sweeteners, and creamers to formulate a wide variety of foaming instant beverage products.

The product of the invention contains gas (e.g. trapped air) for forming a foamed upper surface when reconstituted with water. It has also been found to dissolve at a greater rate than traditionally associated with instant beverage products.

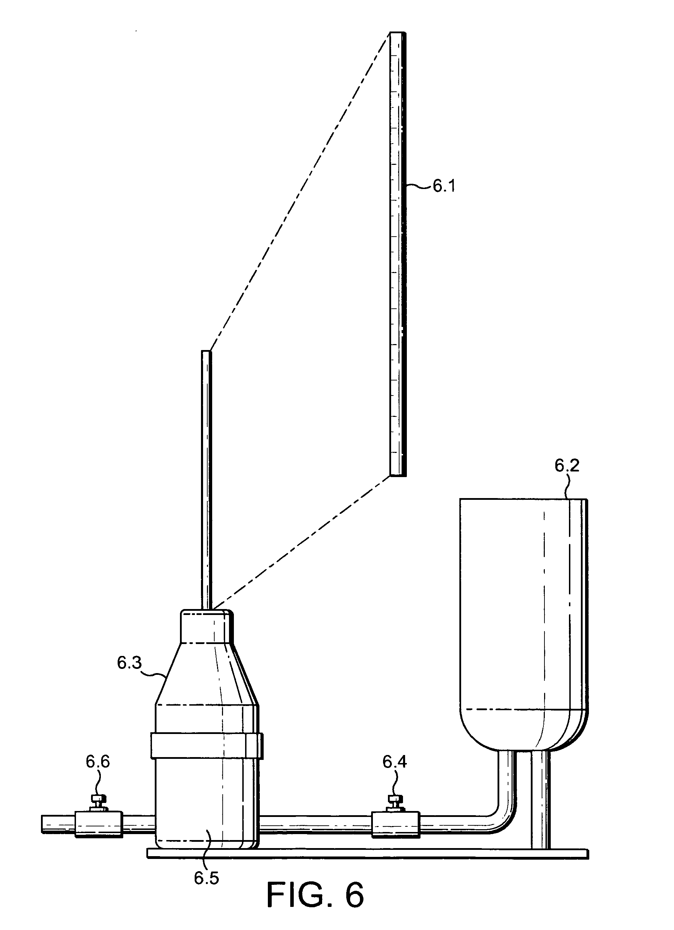

The powders of the invention may thus be used in the preparation of an instant beverage. Preferably, the instant beverage is coffee. Upon reconstitution, the instant beverage preferably has a crema of at least 3 mL when using 5 g of powder in 200 mL of deionised water at 85°C. The amount of crema produced can be measured with a simple device (Figure 6) consisting of a reconstitution vessel connected to a water reservoir, which is initially blocked off with a valve. After reconstituting, the reconstitution vessel is closed with a special lid that ends in a scaled capillary. The valve between the reconstitution vessel and the water reservoir is then opened and the water (standard tap water of any temperature) pushes the reconstituted beverage upwards into the capillary, thus facilitating the reading of the crema volume.

In the method of the invention, beverage powder particles may be obtained by heating a base powder above its glass transition temperature. This is achieved by sintering as described in the following.

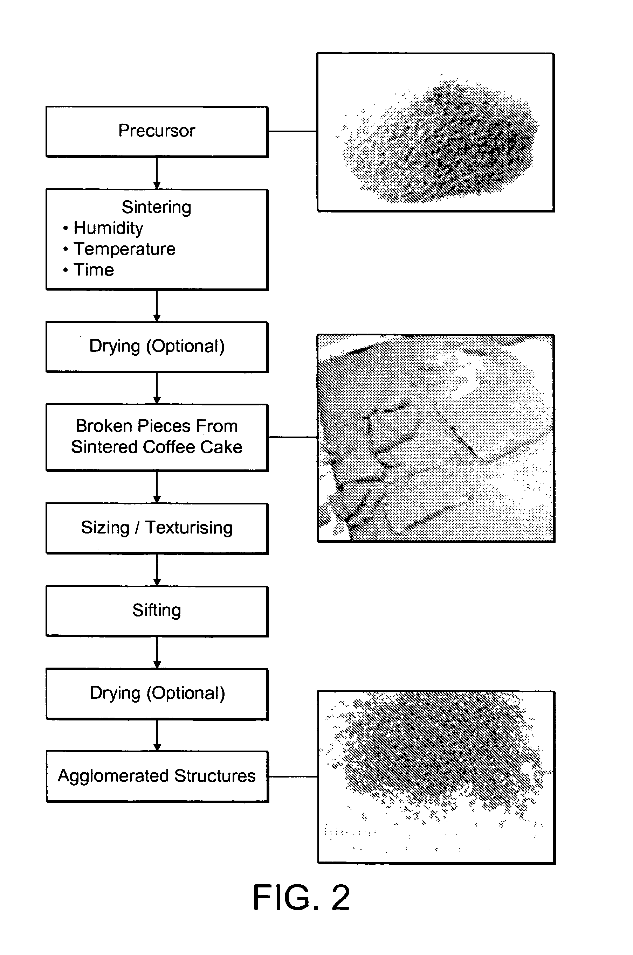

According to the process of the invention and referring to figure 2, a porous particulate base powder is provided in a first step. This particulate precursor may be, for example, a powdered instant coffee product that has been produced according to traditional methods of spray-drying or freeze-drying of extracts derived from roast and ground coffee. Thus, precursors which have been spray-dried, gas-injected spray-dried, gas-injected extruded, gas-injected freeze-dried, and the like are suitable in the present method. Alternatively, the precursor powder may be spray-frozen particles. Such products and their methods of manufacture are well known to the person skilled the art.

Preferably the precursor powder is spray-dried. Typically, the precursor comprises instant coffee particles.

The porous base powder is characterised in that it has a particle porosity of at least 45%, wherein the pores have a $D_{50}$ diameter of less than 80 micrometres and has a pore diameter distribution span of less than 4. Such a powder may be obtained according to the method described in US -A-2010/0215818. This provides the advantage that the instant beverage powder produced provides, upon reconstitution, more crema.

The tapped density of the precursor is typically between 150 and 600 g/L.

The second step in the present method is the sintering of the particulate porous base powder to form an agglomerated cake. This is achieved by heating the base powder above its glass transition temperature and controlling the fusion time. It has been found that a particulate precursor can be sintered under specific conditions which enable the pore structure of the sintered particles to remain intact and thereby to retain a desired amount of gas therein.

The glass transition temperature of instant coffee granules can be higher or lower depending on the specific chemical composition and moisture level. The glass transition temperature can intentionally be raised or lowered by simply decreasing or increasing, respectively, the moisture content of the coffee product using any suitable method known to one skilled in the art.

The glass transition temperature can be measured using established Differential Scanning Calorimetry or Thermal Mechanical Analysis techniques. The glass transition temperature marks a secondary phase change characterised by transformation of the powder product from a rigid glassy state to a softened rubbery state. In general, gas solubilities and diffusion rates are higher in materials at temperatures above their glass transition temperature.

In order to achieve controlled fusion of the particles, the temperature at which sintering is carried out is preferably at least 35°C above the glass transition temperature of the agglomerated cake, more preferably at least 40°C and even more preferably at least 45°C above. In the context of the present invention, the terms "wet", "pre-wet" and the like are used interchangeably with and so have the same meaning as the terms "humidify, pre-humidify" and the like.

In the present method, it is preferable to pre-humidify or humidify the powder in a way that the internal structure remains intact.

In order to achieve controlled fusion of the particles, it is desirable that the precursor particles are firstly dried to the desired (internal) final water content before undergoing the humidification step. It has been found that this improves the foaming and dissolution characteristics of the sintered product. The particles, prior to humidification, are preferably dried to a moisture content of from 1 to 7% by weight, based on the total weight of the particles, more preferably from 2 to 6%, most preferably from 3 to 5%.

The pre-wetting or simultaneous wetting during sintering is achieved by exposing the particles to a gas, typically air, which has a specific humidity level, or by condensation or by contacting with an atomised liquid. The present method differs with regular agglomeration in that the particles in the sintering process stay in contact with each other during the entire humidification or wetting step.

Preferably the air which is used to wet the surface of the particles has a humidity level of from 20 to 80%, preferably 60%.

The sintering process conditions are chosen such that the desired end-product characteristics are obtained.

Sintering can be carried out according to any well known sintering process though belt sintering is preferred.

In a preferred process, the particles are distributed onto a preferably porous surface to form a bed. Preferably the bed has a thickness of from 1 to 50mm, more preferably 2 to 35mm, most preferably 5 to 25mm.

Although not essential, the use of a porous bed is advantageous since it has been found that this enables a thicker bed to be sintered, and so gives a greater throughput of product. Furthermore, by allowing air to penetrate the bed from all sides, this results in an improved homogeneity in the degree of sintering across the bed.

The bed then undergoes the sintering step. Typically, the bed will be transported into a sintering zone for this step.

Preferably, the sintering is carried out under a humid atmosphere, said atmosphere having a moisture content of 20 to 80%, preferably 60%.

The temperature at which sintering is carried out is preferably within the range of from 40°-90°C, preferably about 70°C.

During the sintering, the heat is applied by convection. The gaseous heating media passes over and/or through the product. This way of heating allows a controlled and homogeneous sintering of the product.

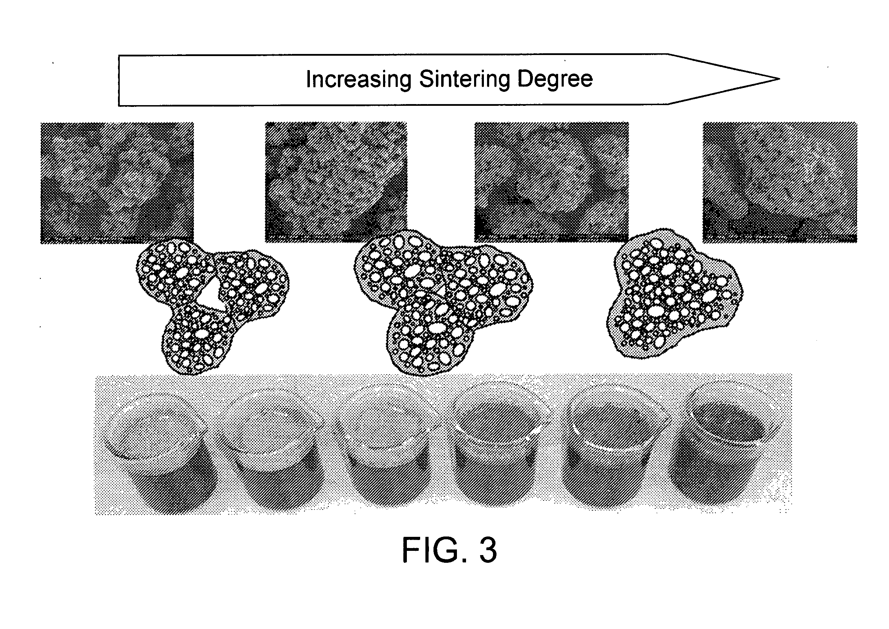

The sintering must be carried out during a period of time which enables the correct degree of fusing of the particles without causing undesirable changes to the internal structure of the particles. As can be seen in Figure 3, the sintering residence time will influence the microstructure of the precursor particles. An increasing sintering time will result in an increased fusion between the particles. This will influence the foaming properties of the sintered product (as shown in Fig. 3).

Figure 3 represents on the left hand-side a beverage with an excellent foamed upper surface according to the present invention, whereas on the right hand-side is shown a beverage with substantially no foam.

If, according to an embodiment of the invention, the precursor is pre-humidified prior to sintering, this will generally have the effect of reducing the sintering residence time.

During the sintering process, a slight and controlled compaction pressure may be applied. However, preferably no external compaction pressure is applied to the bed. This is important to get the desired porosity of the bed. The desired porosity is important for a fast dissolution and crema formation upon reconstitution.

Thus, the present method is unlike traditional sintering which uses a combination of heat and elevated pressures which typically causes a considerable reduction of interparticle porosity and a collapse of the internal particle structure.

During the sintering process, the product takes up moisture from the gaseous heating media. The resulting final moisture of the sintered product is from 4% to 12% by weight of water based on the total weight of the product. Following sintering, the "cake" obtained (cf. fig. 2) is preferably conditioned to a desired temperature. This is typically carried out by an air stream of adjustable temperature, preferably between 10 and 60°C.

In a third step of the method, the agglomerated cake is then texturised to obtain the instant beverage powder. Typically, texturising involves cutting or grinding of the cake to form particles having a desired average diameter which resemble typically freeze-dried or agglomerated instant beverage products. In one embodiment of the invention, the product of the invention is not freeze-dried. Preferably, the texturising is carried out by forcing the agglomerated cake through a sieve having a mesh size between 1 and 5mm, preferably about 2.5mm.

Sifting is then carried out in order to remove the "fines" or the oversized particles from the product.

Optionally and advantageously, a further drying step is carried out in order to provide the sintered product with a moisture content of about 2 to 8% by weight of water based on the total weight of the product. Preferably the final product has a moisture content between 2% and 4.5%, more preferably about 3.5%.

Typically, the manufactured instant beverage powder has a tapped density preferably between 150-300 g/L.

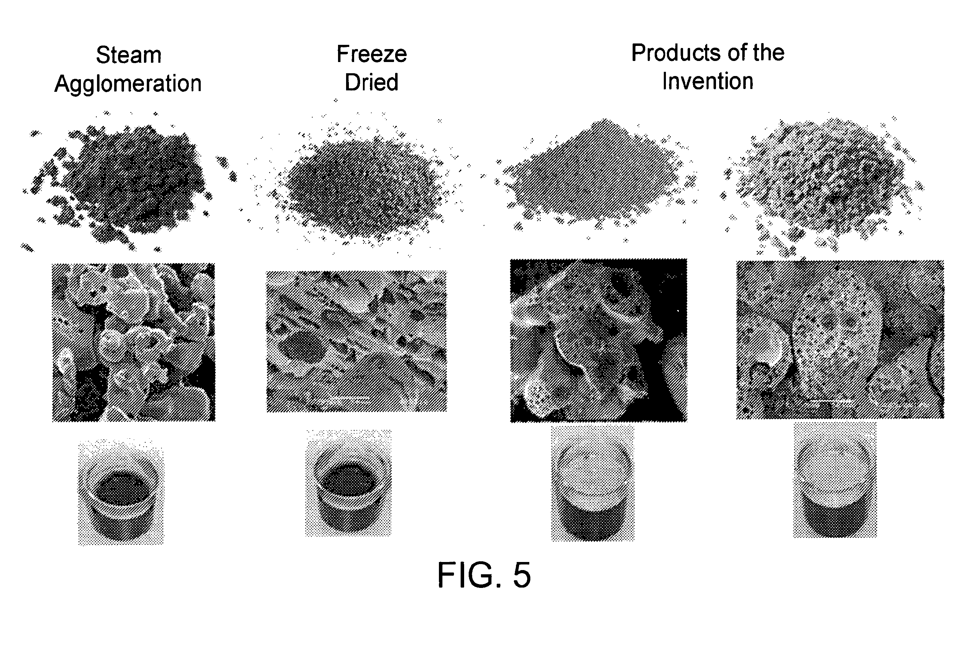

The present method offers advantages in terms of the final product structure in comparison to traditional manufacturing methods. This is illustrated in Fig. 5.

For instance, in a traditional steam agglomeration process, the initial powder particles are usually exposed in an agglomeration nozzle to steam and specific pressure conditions for particles collision. The steam condensates partially on the particle surface, causes a state change from glassy into rubbery state and creates a sticky surface that allows the particles to agglomerate. This process typically takes place in a time range of less than 1 second. Therefore, the contact time between particles available for fusion is very short and demands a severe state change to make agglomeration happen. This severe state change concerns not only the particle surface but also affects the internal pore structure of the particles. In consequence, the particles lose their ability to generate foam.

By contrast, in the present invention, the product powder is preferably spread in a thin layer and is exposed to a controlled atmosphere with a specific temperature and humidity. The transfer of humidity and heat from the atmosphere to the product takes place slowly so that the state transformation at the particle surface can be better controlled. The long contact time leaves time for slow particle fusion. It allows to apply just the right degree of state change at the surface required for the desired fusion of particles at their point of contact in the powder layer but without affecting the internal structure, within which the gas is entrapped. In addition, because the powder layer maintains a desired level of interparticle porosity after fusion, this allows for improved water penetration into the final product upon reconstitution, which accelerates particle disintegration and dissolution in the cup. The rapid disintegration and dissolution ensures timely gas release which is essential for foam-formation.

A product obtainable by the process described above typically comprises granulated structures (cf. fig. 1). Such a product is particularly suited for foaming instant coffee beverages. It may also be suited for use in foaming instant cappuccino or latte type beverage mixes that are formulated with a foaming creamer powder composition containing protein, such as foaming creamer compositions described in U.S. Pat. No. 4,438,147 and in EP 0 458 310 or in U.S. Pat. No. 6,129,943, as a means to increase the volume of beverage froth produced upon reconstitution in liquid.

The present invention is further illustrated by means of the following non-limiting examples.

## Examples

In the following examples, all values are percentage by weight unless otherwise indicated.

Example 1

Preparation of an agglomerated soluble coffee product by sintering on a tray

A soluble coffee product was manufactured according to the flowsheet in Figure 2. A spray-dried soluble coffee powder with a particle mean diameter of approximately $D_{50}$=200 $\mu$m and a moisture content of 3.5g $H_2O$ / 100g product served as particulate precursor. This powder was spread on a flat, porous (pore size 100 pm) surface material with a product layer thickness of 10 mm. The product was then placed in a controlled atmosphere oven where it was heated and humidified by convection with hot and humid air. The air temperature was 70°C and the relative humidity was 60%. During this process the particles were heated and took up moisture from the humid air. The particles fused together at their points of contact (sintering) and formed a cake of agglomerated particles. The product residence time was 8 min and the resulting product moisture was 6.5g $H_2O$ / 100g product. The product was then removed from the oven and cooled by ambient air. It was removed from the tray and passed through a sieve with a mesh size of 2.5mm. Fine particles with a diameter of x<lmm were removed by sieving. The agglomerates were dried to a final water content of 3.5g $H_2O$ / 100g product in a fluidised bed with hot air at 50°C during 10 min. The product was reconstituted with hot water (2g powder / 100 ml hot water) and achieved a foam covering the surface of the beverage. The foam appearance was similar to the foam known as "crema" on a roast and ground coffee beverage obtained from an espresso machine.

Example 2

Preparation of a granulated soluble coffee product by belt sintering

A soluble coffee product was manufactured according to the flowsheet in Figure 2. A spray-dried soluble coffee powder wi th a particle mean diameter of approximately $D_{50}$=200 $\mu$m and a moisture content of 3.5g $H_2O$ / 100g product served as particulate precursor. This powder was evenly distributed in a layer on a continuous belt with a product layer thickness of 5mm. The belt was made from a porous material (pore size 100 $\mu$m) in order to allow the air to penetrate. The product on the belt was then conveyed into a zone of controlled atmosphere where it was heated and humidified by convection with hot and humid air. The air temperature was 70°C and the relative humidity was 65%. During this process the particles were heated and took up moisture from the humid air. The particles fused together at their points of contact (sintering) and formed a cake of agglomerated particles. The product residence time in the sintering zone was 130s and the resulting product moisture was 6.5g $H_2O$ / 100g product. The product then passed through a cooling zone where it was exposed to predried ambient air. The sintered cake was removed from the belt and passed through a grinder with a gap size of 2.5 mm. Fine particles with a diameter of D<0.630 mm were removed by sieving. The granulates were dried to a final water content of 3.5g $H_2O$/ 100g product in a fluidised bed with hot air of at 50°C during 10 min. The product was reconstituted with hot water (2 g powder / 100 ml hot water) and achieved a foam covering the surface of the beverage. The foam appearance was similar to the foam known as "crema" on a roast and ground coffee beverage obtained from an espresso machine.

**Mercury porosimeter to evaluate foaming porosity, particle porosity and open pore volume**

AutoPore IV 9520 was used for the structure evaluation (Micromeritics Inc. Norcrose, GA, USA). The operation pressure for Hg intrusion was from 2.8 kPa (0.4 psia) to 62 MPa (9000 psia) (with low pressure from 2.8 kPa (0.4 psia) to 276 kPa (40 psia) and high pressure port from 138 kPa to 62 MPa (20 to 9000 psia)). The pore diameter under this pressure is ranged from 500 to 0.01 $\mu$m. The data reported was volume (ml/g) at different pore diameter ($\mu$m).

About 0.1 to 0.4 g of samples was precisely weighted and packed in a penetrometer (volume 3.5 ml, neck or capillary stem diameter 0.3 mm and stem volume of 0.5 ml).

After the penetrometer was inserted to the lower pressure port, sample was evacuated at 76 kPa/min (1.1 psia/min), then switch to a medium rate at 3.4 kPa (0.5 psia) and a fast rate at 120 Pa (900 $\mu$m Hg). The evacuating target was 8.0 Pa (60 $\mu$m Hg). After reaching the target, the evacuation was continued for 5 min before Hg is filled in.

The measurement was conducted in set-time equilibration. That is, the pressure points at which data are to be taken and the elapsed time at that pressure in the set-time equilibration (10 sec) mode. Roughly 140 data points were collected at the pressure ranges.

The bulk volume of the granulate was obtained from the initial volume of mercury and the sample holder. The volume of the open pores with opening diameter greater than 2 micrometers (3) was obtained after intrusion with mercury up to a diameter of 2 micrometer. Subtraction of this volume from the bulk volume of the granulate gave the new volume of the granulate which comprises the closed pores (2), open pores with opening diameters less than 2 micrometers (4) and the volume of the coffee matrix. The volume of the closed pores, open pores with opening larger than 2 micrometers in the granulate was obtained by subtracting the volume of the coffee matrix from the new volume of the granulate. The volume of the coffee matrix was obtained from the weight of the sample and coffee matrix density. The foaming porosity is the ratio of the volume of closed pores and open pores having an opening diameter of less than 2 micrometer over the new volume of the granulate. The particle porosity of the precursor powder may be measures using the method as described in US-A-2010/0215818.

The volume of open pores per gram of product in the diameter range 1 to 500 micrometres gives the "open pore volume".

### Determination of the internal structure of coffee particles by microcomputed X-ray tomography

X-ray tomography scans were performed with a 1172 Skyscan MCT (Antwerpen, Belgium) with a X-ray beam of 80kV and 100uA. Scans were performed with the Skyscan software (version 1.5 (build 0) A (Hamamatsu 10Mp camera), reconstruction with the Skyscan recon software (version 1.4.4) and 3D image analysis with CTAn software (version 1.7.0.3, 64-bit).

To obtain a pixel size of 1um, the camera was set up at 4000x2096 pixels and samples were placed in the Far position. Exposure time is 2356 ms. Scan was performed over 180°, the rotation step was 0.3° and the frame averaging was 4.

The reconstruction of the dataset was performed over 800 slices in average, with the settings contrast at 0-0.25. Smoothing and ring artefact reduction were set up at 1 and 10, respectively.

3D image analysis was performed on the 1 um per pixel datasets. The analysis was performed in two steps: (i) a first step to select the particle be analysed by excluding the inter particle voids, (ii) the second step to obtain the distribution of the porosity in the selected region of interest. The foaming porosity value obtained by this technique matched closely that obtained by mercury porosimetry.

### Selection of the particles, i.e. volume of interest

The images of 1um per pixel resolution in grey levels were segmented at a grey level of 30 out of 255, cleaned by removing any single spots smaller than 16 pixels, and then dilated by mathematical morphology (radius of 3 pixels). The selection of the volume of interest was performed through the shrink-wrap function, and then this volume was eroded by mathematical morphology (radius of 3 pixels) to adjust to the surface of the particles.

### Void space distribution in the region of interest:

The images were reloaded and segmented at a grey level of 40 out of 255. The foaming porosity was then calculated as the ratio of the volume of pores to the volume of the particles, the volume of the particles being equal to the volume of interest. The structure separation gave the pores size distribution.

### Claims

1. Method for the manufacture of an instant beverage powder comprising the steps of:

   a. Providing a porous particulate base powder
   b. Sintering said powder to form an agglomerated cake and
   c. texturising the agglomerated cake to obtain an instant beverage powder,

   wherein the porous base powder is **characterised in that** it has a particle porosity of at least 45%, wherein the pores have a $D_{50}$ diameter of less than 80 micrometres and has a pore diameter distribution span of less than 4.

2. Method according to claim 1, wherein the porous base powder has a tapped density of 150-600g/L.

3. Method according to claims 1 or 2, wherein the porous base powder is humidified prior to sintering.

4. Method according to any of claims 1 to 3, wherein the sintering is carried out preferably at 35°C above the glass transition temperature of the sintered cake, more preferably 40°C above and most preferably 45°C above the glass transition.

5. Method according to any of claims 1 to 4, wherein the sintering is carried out at 40-90°C, preferably 70°C.

6. Method according to any of claims 1 to 5, wherein the sintering is carried out under humid atmosphere, said atmosphere having a moisture content of 20 to 80%, preferably 60%.

**7.** Method according to any of claims 1 to 6, wherein the texturising is carried out by forcing the agglomerated cake through a sieve having a mesh size between 1 and 5mm, preferably 2.5mm.

**8.** Method according to any of claims 1 to 7, wherein the instant beverage powder has a final water content of 2 to 4.5%, preferably about 3.5%.

**9.** Method according to any of claims 1 to 8, wherein the instant beverage powder is a coffee powder.

**10.** Instant beverage powder obtainable by a method according to claims 1 to 9.

**Patentansprüche**

**1.** Verfahren zur Herstellung eines Instant-Getränkepulvers mit den folgenden Schritten:

   a. Bereitstellen eines porösen, partikelförmigen Grundpulvers
   b. Sintern des Pulvers zur Bildung eines Agglomerat-Kuchens sowie
   c. Texturieren des Agglomerat-Kuchens, um ein Instant-Getränkepulver zu erhalten,

wobei das poröse Grundpulver **dadurch gekennzeichnet ist, dass** es eine Partikelporosität von mindestens 45% aufweist, wobei die Poren einen $D_{50}$ Durchmesser von weniger als 80 Mikrometer aufweisen, und einen Porendurchmesser-Verteilungsbereich von weniger als 4 hat.

**2.** Verfahren gemäß Anspruch 1 , wobei das poröse Grundpulver eine Anzapfdichte von 150-600 g/l aufweist.

**3.** Verfahren gemäß Anspruch 1 oder 2, wobei das poröse Grundpulver vor dem Sintern befeuchtet wird.

**4.** Verfahren gemäß einem der Ansprüche 1 bis 3, wobei das Sintern vorzugsweise bei 35°C über der Glasübergangstemperatur des gesinterten Kuchens, weiter bevorzugt bei 40°C und höchst bevorzugt bei 45°C über dem Glasübergang erfolgt.

**5.** Verfahren gemäß einem der Ansprüche 1 bis 4, wobei das Sintern bei 40-90°C, vorzugsweise bei 70°C erfolgt.

**6.** Verfahren gemäß einem der Ansprüche 1 bis 5, wobei das Sintern in feuchter Atmosphäre erfolgt, wobei die Atmosphäre einen Feuchtigkeitsgehalt von 20 bis 80%, vorzugsweise von 60% aufweist.

**7.** Verfahren gemäß einem der Ansprüche 1 bis 6, wobei das Texturieren derart durchgeführt wird, dass der Agglomerat-Kuchen durch ein Sieb mit einer Maschenweite zwischen 1 und 5 mm, vorzugsweise 2,5 mm, gedrückt wird.

**8.** Verfahren gemäß einem der Ansprüche 1 bis 7, wobei das Instant-Getränkepulver einen endgültigen Wassergehalt von 2 bis 4,5%, vorzugsweise von ca. 3,5% aufweist.

**9.** Verfahren gemäß einem der Ansprüche 1 bis 8, wobei das Instant-Getränkepulver aus einem Kaffeepulver besteht.

**10.** Instant-Getränkepulver, das durch ein Verfahren gemäß Anspruch 1 bis 9 gewonnen wird.

**Revendications**

**1.** Procédé pour la fabrication d'une poudre de boisson instantanée comprenant les étapes suivantes:

   a. Approvisionnement d'une poudre de base particulaire poreuse
   b. Frittage de ladite poudre pour former un gâteau aggloméré et
   c. Texturation du gâteau aggloméré pour obtenir une poudre de boisson instantanée,

Où la poudre de base poreuse est **caractérisée en ce qu'**elle a une porosité particulaire d'au moins 45%, où les pores ont un diamètre $D_{50}$ de moins de 80 micromètres et **en ce qu'**elle a une étendue de distribution du diamètre des pores de moins de 4.

**2.** Procédé selon la revendication 1, où la poudre de base poreuse a une densité tassée de 150-600g/L.

**3.** Procédé selon la revendication 1 ou 2, où la poudre de base poreuse est humidifiée avant d'être frittée.

**4.** Procédé selon l'une des revendications de 1 à 3, où le frittage est effectué à 35°C au-dessus de la température de transition vitreuse du gâteau fritté, préférablement à 40°C au-dessus, et encore plus préférablement à 45°C au dessus de la transition vitreuse.

**5.** Procédé selon l'une des revendications de 1 à 4, où le frittage est effectué à 40-90°C, préférablement à 70°C.

**6.** Procédé selon l'une des revendications de 1 à 5, où le frittage est effectué sous atmosphère humide, ladite atmosphère ayant un taux d'humidité de 20 à 80%, préférablement 60%.

**7.** Procédé selon l'une des revendications de 1 à 6, où la texturation est effectuée en forçant le gâteau aggloméré au travers d'un tamis ayant une taille de maille entre 1 et 5mm, préférablement 2.5mm.

**8.** Procédé selon l'une des revendications de 1 à 7, où la poudre de boisson instantanée a une quantité finale d'eau de 2 à 4.5%, préférablement de 3.5%.

**9.** Procédé selon l'une des revendications de 1 à 8 où la poudre de boisson instantanée est une poudre de café.

**10.** Poudre de boisson instantanée disponible par un procédé selon une des revendications 1 à 9.

FIG. 1

FIG. 2

FIG. 3

Small Bubble

Big Bubble

FIG. 4

FIG. 5

FIG. 6

**EP 2 217 086 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6713113 A
- US 4830869 A
- US 4903585 A, Wimmers
- US 4618500 A, Forquer
- US 3749378 A, Rhodes
- EP 0839457 B1, Kraft Foods
- US 6497911 A, Niro
- US 5089279 A, Conopco
- US 4394395 A, Nestlé
- DE 2402446 A
- US 20100215818 A
- US 4438147 A
- EP 0458310 A
- US 6129943 A